# EUROPÄISCHE PATENTSCHRIFT

(11) **EP 2 463 951 B1**
(45) Veröffentlichungstag und Bekanntmachung des Hinweises auf die Patenterteilung: **14.02.2018**
(21) Anmeldenummer: 11191715.9
(22) Anmeldetag: 02.12.2011
(51) Int. Cl.: H01M 10/44, B60L 11/18

(54) **VERFAHREN ZUM LADEN EINER TRAKTIONSBATTERIE EINES BATTERIE-ELEKTRISCH BETRIEBENEN FAHRZEUGS**
METHOD FOR CHARGING A TRACTION BATTERY OF A BATTERY-ELECTRICITY OPERATED VEHICLE
PROCÉDÉ DE CHARGEMENT D'UNE BATTERIE DE TRACTION D'UN VÉHICULE FONCTIONNANT AVEC UNE BATTERIE ÉLECTRIQUE

(30) Priorität: 08.12.2010 DE 102010053795
(43) Veröffentlichungstag der Anmeldung: 13.06.2012
(73) Patentinhaber: STILL GmbH, 22113 Hamburg (DE)
(72) Erfinder: Tödter, Joachim Dr., 22391 Hamburg (DE); Frerichs, Ludger Dr., 48336 Sassenberg (DE); Claus, Alexander, 22303 Hamburg (DE)
(74) Vertreter: Patentship Patentanwaltsgesellschaft mbH

(56) Entgegenhaltungen:
- EP-A1- 2 182 607
- WO-A1-2009/067810
- WO-A1-2010/003711
- WO-A2-2009/052446
- DE-A1- 4 337 978
- DE-A1-102007 039 480
- DE-A1-102008 059 851
- SHRESTHA G B ET AL: "A study of electric vehicle battery charging demand in the context of Singapore", POWER ENGINEERING CONFERENCE, 2007. IPEC 2007. INTERNATIONAL, IEEE, PISCATAWAY, NJ, USA, 3. Dezember 2007 (2007-12-03), Seiten 64-69, XP031264081, ISBN: 978-981-05-9423-7

## Beschreibung

Die Erfindung betrifft ein Verfahren zum Laden einer Traktionsbatterie eines batterie-elektrisch betriebenen Fahrzeugs, insbesondere eines Flurförderzeugs, mittels einer Batterieladeanlage und eine Batterieladeanlage zur Durchführung dieses Verfahrens.

Batterie-elektrisch betriebene Fahrzeuge, beispielsweise Flurförderzeuge, weisen eine Traktionsbatterie als elektrische Energiequelle auf, mit der ein elektrisches Antriebssystem mit elektrischer Energie versorgt wird, das im Falle eines Flurförderzeugs mindestens einen elektrischen Fahrmotor und einen elektrischen Pumpenmotor, der die Arbeitshydraulik und/oder eine hydraulischen Lenkungseinrichtung versorgt, sowie weitere elektrischen Verbraucher umfasst.

Die Traktionsbatterien müssen zum Betrieb des Fahrzeugs in regelmäßigen zeitlichen Abständen aufgeladen werden. Hierzu kann die Traktionsbatterie im Fahrzeug verbleiben, wobei die Batterie vom Fahrzeugbordnetz getrennt wird und der Batteriestecker der Batterie mit einem Ladegerät verbunden wird, um die Batterie beispielsweise während der Betriebstätigkeit auf- und zwischenzuladen. Alternativ kann die Batterie während einer Betriebspause, beispielsweise über Nacht, aufgeladen werden. Zudem kann ein Wechselsystem vorgesehen werden, bei dem eine entladene Traktionsbatterie aus dem Fahrzeug ausgebaut und gegen eine aufgeladene Traktionsbatterie ausgewechselt wird. Mit einem derartigen Wechselsystem kann die entladene Batterie tageszeitunabhängig aufgeladen werden.

Zum Laden der Traktionsbatterie werden Batterieladeanlagen verwendet, die in das Fahrzeug integriert werden können oder von externen Batterieladeanlagen gebildet werden können. Das Laden der Traktionsbatterie erfolgt hierbei durch Anschluss der Traktionsbatterie an ein Stromversorgungsnetz eines Energieversorgungsunternehmens. In Abhängigkeit von dem gewählten bzw. zur Verfügung stehenden Energietarif (Tag- bzw. Nachtstrom) verursacht eine Batterieladung entsprechende Kosten für die benötigte elektrische Energie.

Aus der der WO 2010/003711 A1 ist eine Adaptereinrichtung mit einem Verfahren zum Laden einer Fahrzeugbatterie eines Elektrofahrzeugs bekannt, bei dem Strompreise berücksichtigt werden.

Der vorliegenden Erfindung liegt die Aufgabe zugrunde, ein Verfahren zum Laden einer Traktionsbatterie und eine Batterieladeanlage zum Laden einer Traktionsbatterie eines batterie-elektrisch betriebenen Fahrzeuges, insbesondere eines Flurförderzeugs, zur Verfügung zu stellen, die eine kostenoptimierte Ladung der Traktionsbatterie ermöglichen.

Erfindungsgemäß wird diese Aufgabe durch ein Verfahren mit den Merkmalen des Anspruchs 1 und eine Batterieladeanlage mit den Merkmalen des Anspruchs 12 gelöst.

Bei dem erfindungsgemäßen Verfahren zum Laden einer Traktionsbatterie eines batterie-elektrisch betriebenen Fahrzeugs, insbesondere eines Flurförderzeugs, mittels einer Batterieladeanlage, die ein Ladegerät zum Laden der Traktionsbatterie, eine Einrichtung zur Ermittlung des momentanen Energiepreises im Stromversorgungsnetz und eine elektronische Regeleinrichtung zum Steuern des Ladevorgangs aufweist, wird der momentane Energiepreis im Stromversorgungsnetz durch die Batterieladeanlage ermittelt. In Abhängigkeit von dem momentanen Energiepreis und/oder der zeitlichen Entwicklung des momentanen Energiepreises im Stromversorgungsnetz wird das Laden und der Ladevorgang, insbesondere der Beginn des Ladevorgangs, der Traktionsbatterie durch die Batterieladeanlage durchgeführt. Dabei wird zur Ermittlung des aktuellen Energiepreises ein elektronischer Stromzähler verwendet, mit dem der aktuelle Energiepreis beim Energieversorgungsunternehmen erfasst und abgefragt werden kann. Es werden Umweltdaten, insbesondere Wetterdaten und/oder Wettervorhersagen, von der Batterieladeanlage erfasst und berücksichtigt, insbesondere Wetterdaten und/oder Wettervorhersagen, die sich auf die Erzeugungsmenge regenerativer Energie auswirken. Von der Regeleinrichtung werden anhand der Wetterdaten und/oder Wettervorhersagen Prognosen des Energiepreises ermittelt, die bei dem Ladevorgang der Traktionsbatterie berücksichtigt werden.

Die Erfindung macht sich die Erkenntnis zu Nutze, dass sich mit zunehmendem Einspeisen von Strom aus regenerativen Energien die Stromerzeugung und Stromeinspeisung in ein Stromversorgungsnetz nicht nur nach der Nachfrage, sondern auch nach den Wetterverhältnissen, insbesondere Wind und Sonne, richtet. Entsprechend entwickeln sich die Energiepreise nach dem Angebot und der Produktion an Strom, so dass bei einer hohen Stromerzeugung, beispielsweise bei Starkwind, und einer geringen Nachfrage kurzfristige Änderungen des Energiepreises im Tagesverlauf auftreten, die bei einem massiven Stromüberangebot bis zu negativen Strompreisen und somit einer Vergütung bei der Abnahme von Strom führen können. Mit dem erfindungsgemäßen Verfahren können diese kurzfristigen, aus dem Stromangebot und der Stromnachfrage resultierenden Schwankungen und tarifunabhängigen Veränderungen im Tagesverlauf des Energiepreises genutzt werden, indem die kurzfristigen Energiepreisschwankungen im Energieversorgungsnetz während des Ladezeitraumes der Traktionsbatterie berücksichtigt werden und das Laden der Traktionsbatterie in Abhängigkeit von dem jeweiligen Energiepreis durchgeführt wird. Der aufgrund dieser kurzfristigen Schwankungen bestehende momentane Energiepreis kann sich in sehr kurzen Zeiträumen, von zum Beispiel wenigen Minuten oder Stunden, ändern und daher innerhalb eines Zeitraums, der für die Ladung der Traktionsbatterie zur Verfügung steht, schwanken, beispielsweise aufgrund stark schwankender Windstromerzeugung erheblich schwanken. Wenn solche starken Schwankungen des momentanen Energiepreises auftreten, so kann beispielsweise durch ein Laden nur dann, wenn ein bestimmter momentaner Energiepreis unterschritten wird, eine Kostenersparnis erreicht werden. Mit dem erfindungsgemäßen Verfahren kann somit das Laden der Traktionsbatterie hinsichtlich der benötigten elektrischen Energie kostenseitig optimiert werden. Mit einem elektronischen Stromzähler, beispielsweise einem sogenannten Smart-Meter, können die momentanen und kurzfristigen Schwankungen unterworfenen Energiepreise im Stromversorgungsnetz auf einfache Weise in Echtzeit ermittelt und an die Batterieladeanlage weitergeleitet werden. Indem Wettermeldungen und/oder Wettervorhersagen verarbeitet werden, können derartige Wetterlagen im Vorfeld berücksichtigt werden, die Energiepreisänderungen und mögliche Energiepreisänderungen bedingen können, beispielsweise eine hohe Erzeugung und Einspeisung von Windenergie bei nächtlichen Stürmen. Hierdurch kann mit dem erfindungsgemäßen Verfahren durch eine Vorausabschätzung von Energiepreisänderungen eine weitere Kostensenkung der Energiekosten beim Laden der Traktionsbatterie erzielt werden.

Der momentane Energiepreis wird gemäß einer bevorzugten Ausführungsform der Erfindung durch eine Datenübermittlung vom Energieversorgungsunternehmen des Stromversorgungsnetzes erfasst. Damit können auf einfache Weise die momentanen und aktuellen Energiepreise des Energieversorgungsunternehmens in Echtzeit bei der Steuerung des Ladevorgangs berücksichtigt werden.

Gemäß einer bevorzugten Ausführungsform der Erfindung wird innerhalb eines zur Verfügung stehenden Ladezeitraums zum Laden der Traktionsbatterie der momentane Energiepreis fortlaufend ermittelt und von der Batterieladeanlage innerhalb des Ladezeitraumes mindestens ein Ladezeitbereich zum Laden der Traktionsbatterie ermittelt, in dem die Traktionsbatterie geladen wird. Mit dem erfindungsgemäßen Verfahren wird ermöglicht, den Ladezeitbereich zum Laden der Batterie in dem zur Verfügung stehenden Ladezeitraum in einen oder mehrere Zeitbereiche zu legen, in denen günstige Energiepreise ermittelt werden. Mit dem erfindungsgemäßen Verfahren kann somit die Ladezeit bzw. der Ladestart der Traktionsbatterie derart gesteuert werden, dass das Laden der Traktionsbatterie in Zeitbereiche mit günstigen bzw. niedrigen Energiepreisen erfolgt. Üblicherweise wird eine Traktionsbatterie in einer Arbeitsschicht von acht Stunden genutzt. Für das Laden der Traktionsbatterie steht somit ein Ladezeitraum von zwei Arbeitsschichten und somit 16 Stunden zur Verfügung. Das Laden der Traktionsbatterie erfordert in der Regel acht Stunden. Da somit für das Laden der Traktionsbatterie üblicherweise ein zur Verfügung stehender Ladezeitraum von zwei Arbeitsschichten mit insgesamt 16 Stunden zur Verfügung steht, die Ladung der Traktionsbatterie, beispielsweise einer Blei-Batterie oder einer Nickel-Cadmium-Batterie, selbst jedoch in einem Ladezeitbereich von nur acht Stunden durchgeführt werden kann, kann in dem 16 Stundenfenster des zur Verfügung stehenden Ladezeitraums der konkret erforderliche Ladezeitbereich flexibel geschoben und gegebenenfalls aufgeteilt werden, um Energiepreisschwankungen im Tagesverlauf auszunutzen und die Traktionsbatterie bei günstigen Energiepreisen zu laden. Bei der Ausbildung der Traktionsbatterie als Lithium-Ionen-Batterie, die gegenüber den oben genannten Batterietypen eine kürzere Ladezeit aufweist und mit höheren Ladeströmen aufgeladen werden kann, werden diese Vorteile noch verstärkt.

Bei dem erfindungsgemäßen Verfahren werden gemäß einer bevorzugten Weiterbildung der Erfindung beim Laden der Traktionsbatterie einer oder mehrere der folgenden Vorgabeparameter von der Batterieladeanlage berücksichtigt:
- erforderliche Kapazität, d.h. die in der Batterie gespeicherte elektrische Ladung, der Traktionsbatterie am Ladeende,
- der maximale Energiepreis,
- die erforderliche Batterielademenge, d.h. die Stromabnahmemenge,
- der zur Verfügung stehender Ladezeitraum,
- das späteste Ladeende,
- die Anzahl von möglichen Ladeunterbrechungen,
- der maximale Preis der Batterieladung,
- Gradient des momentanen Energiepreises.

Das Laden der Traktionsbatterie erfolgt somit unter weiterer Berücksichtigung von Unternehmensvorgaben bzw. betriebsbedingten Vorgaben, mit denen der Anwender den Ladevorgang der Traktionsbatterie an seine Anforderungen anpassen kann.

Zudem ist bei dem erfindungsgemäßen Verfahren möglich, dass der Ladestart der Batterieladung durch das Energieversorgungsunternehmen beeinflusst wird.

Gemäß einer alternativen Ausgestaltungsform der Erfindung kann zur Ermittlung des momentanen Energiepreises der momentane Energiepreis von dem Energieversorgungsunternehmen an die Batterieladeanlage übermittelt und in einer Speichereinrichtung abgelegt werden.

Zum Steuern des Ladevorgangs kann das Batterieladegerät entsprechend angesteuert werden, um das Laden der Traktionsbatterie bei günstigen ermittelten momentanen Energiepreisen durchzuführen.

Gemäß einer vorteilhaften Ausführungsform der Erfindung umfasst die Batterieladeanlage eine schaltbare Netzsteckdose, mittels der das Ladegerät an das Stromversorgungsnetz angeschlossen ist, wobei die Steuerung des Ladevorgangs durch An- und Ausschalten der Netzsteckdose durchgeführt wird. Mit einer schaltbaren Netzsteckdose kann auf einfache Weise durch An- und Ausschalten des Ladegeräts der Ladevorgang der Traktionsbatterie gesteuert werden. Hierbei kann ein übliches Ladegerät in dem erfindungsgemäßen Verfahren eingesetzt werden, so dass in einer bestehenden Batterieladeanlage ohne Änderungen an dem Ladegerät das erfindungsgemäße Verfahren einsetzbar ist.

Bei dem erfindungsgemäßen Verfahren weist die Batterieladeanlage bevorzugt eine elektronische Regeleinrichtung zum Steuern des Ladevorgangs auf. In einer elektronischen Regeleinrichtung können auf einfache Weise die momentanen Energiepreise und die Vorgabeparameter verarbeitet werden, um den Ladevorgang der Traktionsbatterie, beispielsweise den Beginn des Ladevorgangs, in Abhängigkeit von den momentanen Energiepreisen und den Vorgabeparametern zu steuern.

Zweckmäßigerweise werden die Vorgabeparameter in der elektronischen Regeleinrichtung eingegeben und abgespeichert. Hierdurch kann der Ladevorgang der Traktionsbatterie auf einfache Weise an die Anforderung des Anwenders angepasst und abgeändert werden.

Gemäß einer vorteilhaften Weiterbildung der Erfindung werden von der Batterieladeanlage Batteriedaten und/oder Zustandsdaten der zu ladenden Traktionsbatterie erfasst und berücksichtigt. Mit derartigen Daten können von der Batterieladeanlage in dem erfindungsgemäßen Verfahren weitere Vorgaben verarbeitet werden. Beispielsweise kann der Batterietyp, der aktuelle Ladezustand und/oder der Ladevorgang der Traktionsbatterie erfasst und beobachtet werden, wodurch in dem erfindungsgemäßen Verfahren von der Batterieladeanlage beispielsweise das zu erwartende Ladeende oder die erforderliche bzw. verbleibende Ladezeit abgeschätzt werden kann.

Weiterhin können von der Batterieladeanlage betriebsinterne Erfahrungswerte berücksichtigt werden. Eine aus gewonnenen Erfahrungswerten gebildete Erfahrungsbasis kann somit beim Ladevorgang, beispielsweise der Entscheidung des Ladestarts und somit des Ladebeginns, berücksichtigt werden.

Die oben genannte Aufgabe wird ebenfalls durch eine Batterieladeanlage gelöst, die ein Ladegerät zum Laden einer Traktionsbatterie, einen elektronischen Stromzähler zum Erfassen des aktuellen Energiepreises im Stromversorgungsnetz bzw. eine Speichereinrichtung zum Empfangen des aktuellen Energiepreises im Stromversorgungsnetz und eine elektronische Regeleinrichtung zum Steuern des Ladevorgangs aufweist, wobei die Batterieladeanlage ein erfindungsgemäßes Verfahren durchführt. Dabei ist die Regeleinrichtung mit einer Empfangseinrichtung für Umweltdaten, insbesondere Wetterdaten und/oder Wettervorhersagen versehen, insbesondere Wetterdaten und/oder Wettervorhersagen, die sich auf die Erzeugungsmenge regenerativer Energie auswirken. Die Regeleinrichtung ermittelt anhand der Wetterdaten und/oder Wettervorhersagen Prognosen des Energiepreises, die bei dem Ladevorgang der Traktionsbatterie berücksichtigt werden. Mit einem elektronischen Stromzähler, beispielsweise einem Smart-Meter können die momentanen Energiepreise und die Energiepreisschwankungen auf einfache Weise von dem Energieversorgungsunternehmen abgefragt und erfasst und an eine elektronische Regeleinrichtung weitergeleitet werden. Bei der Übermittlung des momentanen Energiepreises durch das Energieversorgungsunternehmen ermöglicht eine Speichereinrichtung der Batterieladeanlage auf einfache Weise, dass die momentanen Energiepreise ermittelt und der elektronischen Regeleinrichtung zur Verfügung gestellt werden können. Mit einer elektronischen Regeleinrichtung können die ermittelten momentanen Energiepreise auf einfache Weise verarbeitet werden, um durch Berücksichtigung von momentanen Energiepreisschwankungen, die aus der Stromeinspeisung und der Nachfrage im Energieversorgungsnetz resultieren, und/oder durch Berücksichtigung der Entwicklung des momentanen Energiepreises die Energiekosten für die Ladung der Traktionsbatterie zu senken. Es können von der Regeleinrichtung Wetterlagen ermittelt werden, die zu Energiepreisänderungen führen können, so dass durch eine vorausschauende Planung des Ladevorgangs eine zusätzliche Kostensenkung für die Energiekosten der Ladung erzielbar ist.

Bevorzugt weist die Batterieladeanlage eine schaltbare Netzsteckdose auf, mittels der das Ladegerät an das Stromversorgungsnetz angeschlossen ist, wobei die Steuerung des Ladevorgangs durch Ein- und Ausschalten der Netzsteckdose durch die Regeleinrichtung erfolgt. Mit einer schaltbaren Netzsteckdose, die von der elektronischen Regeleinrichtung gesteuert ist, kann auf einfache Weise der Ladevorgang der Traktionsbatterie durch An- und Ausschalten des Ladegeräts gesteuert werden. Hierbei kann ein übliches, bereits vorhandenes Ladegerät ohne Veränderungen in einer erfindungsgemäßen Batterieladeanlage eingesetzt werden, so dass eine bereits bestehende Batterieanlage durch Ergänzen einer schaltbaren Netzsteckdose, einer elektronischen Regeleinrichtung und eines elektronischen Stromzählers zu einer erfindungsgemäßen Batterieladeanlage ausgebaut werden kann.

Zweckmäßigerweise ist die elektronische Regeleinrichtung mit einer Speichereinrichtung für die Vorgabeparameter versehen, wodurch die bei dem Ladevorgang ebenfalls zu berücksichtigten Vorgabeparameter auf einfache Weise in die Regeleinrichtung eingegeben und angepasst werden können.

Sofern gemäß einer Weiterbildung der Erfindung die Regeleinrichtung mit einer Empfangseinrichtung für Batteriedaten und/oder Zustandsdaten der zu ladenden Batterie versehen ist, können von der Regeleinrichtung weitere Vorgaben unter Berücksichtigung des Batteriezustandes und/oder des Batterietyps verarbeitet werden.

Weitere Vorteile und Einzelheiten der Erfindung werden anhand des in den schematischen Figuren dargestellten Ausführungsbeispiels näher erläutert. Hierbei zeigt
- Figur 1: eine erfindungsgemäße Batterieladeanlage einer Traktionsbatterie eines batterie-elektrisch betriebenen Fahrzeugs,
- Figur 2: ein Diagramm des Energiepreisverlaufs über die Zeit und
- Figur 3: eine weiteres Diagramm des Energiepreisverlaufs über die Zeit.

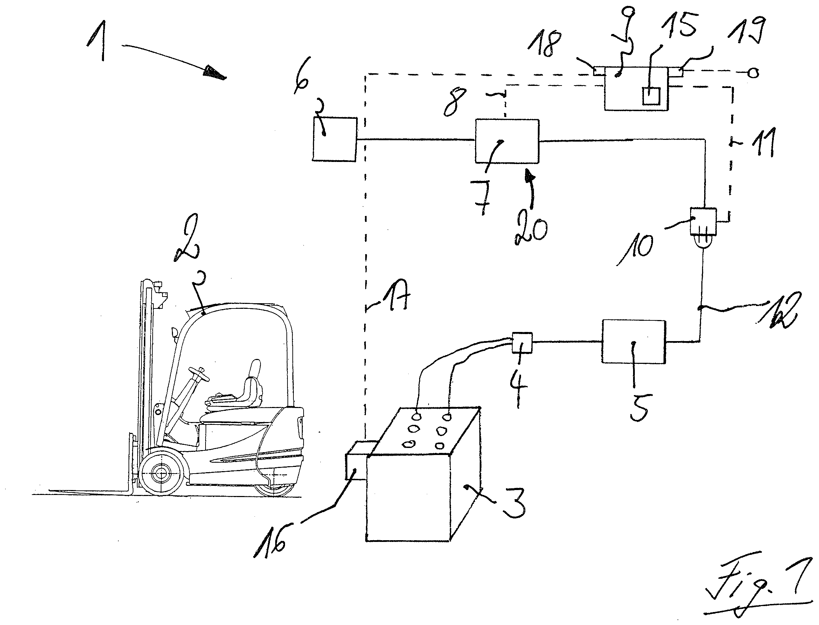

In der Figur 1 ist eine erfindungsgemäße Batterielageanlage 1 in einer schematischen Darstellung gezeigt.

Die Figur 1 zeigt ein batterie-elektrisch betriebenes Fahrzeug 2, beispielsweise ein Flurförderzeug, dessen elektrisches Antriebssystem mit einer Traktionsbatterie 3 mit elektrischer Energie versorgt wird.

Zum Laden der Traktionsbatterie 3 mit elektrischer Energie kann die Traktionsbatterie 3 mittels eines Batteriesteckers 4 an die Batterieladeanlage 1 angeschlossen werden.

Die Batterieladeanlage 1 umfasst ein Ladegerät 5, an das die Traktionsbatterie 3 mittels des Batteriesteckers 4 angeschlossen werden kann und das den Ladevorgang der Traktionsbatterie 3 übernimmt.

Das Ladegerät 5 steht mit dem Stromversorgungsnetz 6 eines Energieversorgungsunternehmens in Verbindung.

Die erfindungsgemäße Batterieladeanlage 1 umfasst einen elektronischen Stromzähler 7, beispielsweise einen Smart-Meter, als Einrichtung 20 zum Ermitteln des momentanen Energiepreises, mit dem der momentane Energiepreis im Stromversorgungsnetz 6 des Energieversorgungsunternehmens abgefragt und erfasst werden kann. Über eine Kommunikationsverbindung 8 werden diese Energiepreisinformationen einer elektronischen Regeleinrichtung 9 der Batterieladeanlage 1 zur Verfügung gestellt, die in Abhängigkeit von dem momentanen Energiepreis und/oder in Abhängigkeit von der zeitlichen Entwicklung des momentanen Energiepreises den Ladevorgang der Traktionsbatterie 3 steuert.

Zum Steuern des Ladevorgangs der Traktionsbatterie 6 ist in einer Anschlussleitung 12 des Ladegeräts 5 an das Stromversorgungsnetz 6 eine schaltbare Netzsteckdose 10 vorgesehen, wobei die Steuerung des Ladevorgangs der Traktionsbatterie 3 durch An- und Ausschalten der Netzsteckdose 10 durchgeführt wird. Die Netzsteckdose 10 steht zum An- und Ausschalten des Ladegeräts 5 mittels einer Steuerleitung 11 mit der elektronischen Regeleinrichtung 9 in Verbindung.

Die Regeleinrichtung 9 umfasst eine Speichereinrichtung 15, in die Vorgabeparameter eingegeben und abgespeichert werden können, um bei der Steuerung des Ladevorgangs der Traktionsbatterie 3 neben den von dem elektronischen Stromzähler 7 ermittelten momentanen Energiepreisen Unternehmensvorgaben und/oder betriebsbedingte Vorgaben des Betreibers des Fahrzeugs 2 zu berücksichtigen.

Derartige Vorgabeparameter können ein oder mehrere der folgenden Größen sein:
- die erforderliche Kapazität, d.h. die in der Batterie gespeicherte elektrische Ladung der Traktionsbatterie am Ladeende,
- die erforderliche Batterielademenge, d.h. die Stromabnahmemenge,
- der maximaler Energiepreis, bei dem der Ladevorgang durchgeführt werden soll,
- der zur Verfügung stehender Ladezeitraum,
- das späteste Ladeende, bei dem das Laden der Traktionsbatterie 3 abgeschlossen sein muss,
- die Anzahl von möglichen Ladeunterbrechungen,
- der maximale Preis der Batterieladung,
- der Gradient des momentanen Energiepreises.

Bei dem dargestellten Ausführungsbeispiel ist weiterhin eine Informationssender 16 vorgesehen, der aktuelle Batteriedaten und/oder Zustandsdaten der zu ladenden Traktionsbatterie 3 der Batterieladeanlage 1 zu Verfügung stellt. Der Informationssender 16 kann beispielsweise von einem Batteriecontroller der Traktionsbatterie 3 gebildet werden. Über eine Kommunikationsverbindung 17 steht der Informationssender 16 mit einer Empfangseinrichtung 18 der elektronischen Regeleinrichtung 9 in Verbindung. Von der Batterieladeanlage 1 können hiermit Batteriedaten und/oder Zustandsdaten der zu ladenden Traktionsbatterie 3 berücksichtigt werden. Mit den aktuellen Batteriedaten und/oder Zustandsdaten ist beispielsweise eine Einschätzung der zu erwartenden Ladezeit realisierbar. Zudem kann die Regeleinrichtung 9 durch die übermittelten aktuellen Batteriedaten und/oder Zustandsdaten mehr Vorgaben unter Berücksichtigung der Batteriedaten verarbeiten hinsichtlich des zu ladenden Batterietyps.

Das dargestellte Ausführungsbeispiel der erfindungsgemäßen Batterieladeanlage 1 ist weiterhin derart ausgebildet, dass Umweltdaten, insbesondere Wetterdaten und/oder Wettervorhersagen von der Batterieladeanlage 1 berücksichtigt werden, insbesondere Wetterdaten und/oder Wettervorhersagen, die sich auf die Erzeugungsmenge regenerativer Energie auswirken. Die Regeleinrichtung 9 ist hierzu mit einer Empfangseinrichtung 19 für Umweltdaten, insbesondere Wetterdaten und/oder Wettervorhersagen versehen. Die Regeleinrichtung 9 ist somit dahingehend erweiterbar, dass Wettermeldungen/Wettervorhersagen verarbeitbar sind, die eine Preisänderung der elektrischen Energie bedingen können. Ein etwaiges Überangebot an elektrischer Energie, beispielsweise eine hohe Erzeugung aus regenerativer Energie bei nächtlichen Stürmen und einer hohen Einspeisung aus Windkraftanlagen, ist mit einer Preissenkung verbunden. Diese Informationsverarbeitung kann eine weitere Kostensenkung bei der Ladung der Traktionsbatterie 3 mit sich führen. Die Regeleinrichtung 9 kann somit anhand der Umweltdaten Prognosen des Energiepreises ermitteln, die bei dem Ladevorgang der Traktionsbatterie 3 berücksichtigt werden können.

Die erfindungsgemäße Batterieladeanlage 1 ermöglicht durch die Installation der Einrichtung 20 zur Ermittlung des momentane Energiepreises, beispielsweise des elektronischen Stromzählers 7, Informationen über aktuelle und momentane Energiepreise aus dem elektrischen Stromversorgungsnetz 6 des Energieversorgungsunternehmens zu erhalten und diese Informationen an die elektronische Regeleinrichtung 9 weiterzuleiten. Die elektronische Regeleinrichtung 9 verarbeitet diese momentane Energiepreisinformation unter Berücksichtigung der Unternehmensvorgaben bzw. betriebsbedingten Vorgaben und steuert den Ladevorgang der Traktionsbatterie 3, beispielsweise indem der Beginn des Ladevorgangs der Traktionsbatterie 3 kontrolliert wird. Die Steuerung des Ladevorgangs erfolgt dadurch, dass die elektronische Regeleinrichtung 9 die schaltbare Netzsteckdose 10 in Anhängigkeit von den ermittelten Energiepreisinformationen und den abgespeicherten Vorgaben ein- bzw. ausschaltet. Das Ladegerät 5 übernimmt bei eingeschalteter Netzsteckdose 10 den Ladevorgang der Traktionsbatterie 3. Die Steuerung des Ladevorgangs kann hierbei anhand des momentanen Energiepreises und/oder des zeitlichen Gradienten und somit der momentanen Energiepreisentwicklung des momentanen Energiepreises erfolgen. Der Gradient und somit die momentane Strompreisentwicklung kann in der Regeleinrichtung 9 auf einfache Weise durch eine zeitliche Ableitung aus dem momentanen Energiepreis ermittelt werden.

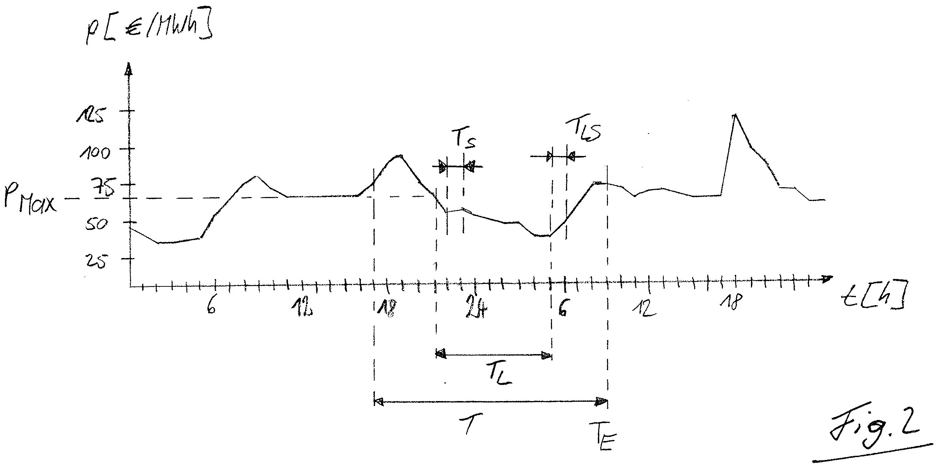

In der Figur 2 ist ein Diagramm eines Energiepreisverlaufs der von dem Energieversorgungsunternehmen im Stromversorgungsnetz 6 zur Verfügung gestellten elektrischen Energie dargestellt, wobei auf der Abszisse die Zeit t in Stunden [h] und auf der Ordinate der momentane Energiepreis P [€/MWh] aufgetragen ist.

Aus dem Verlauf des Energiepreises P ist zu erkennen, dass der Energiepreis P im Tagesverlauf deutliche momentane Schwankungen aufweist, die aus der Stromerzeugung und der Stromnachfrage resultieren, unabhängig von einem bestimmten Energietarif, beispielsweise Tag- oder Nachtstrom.

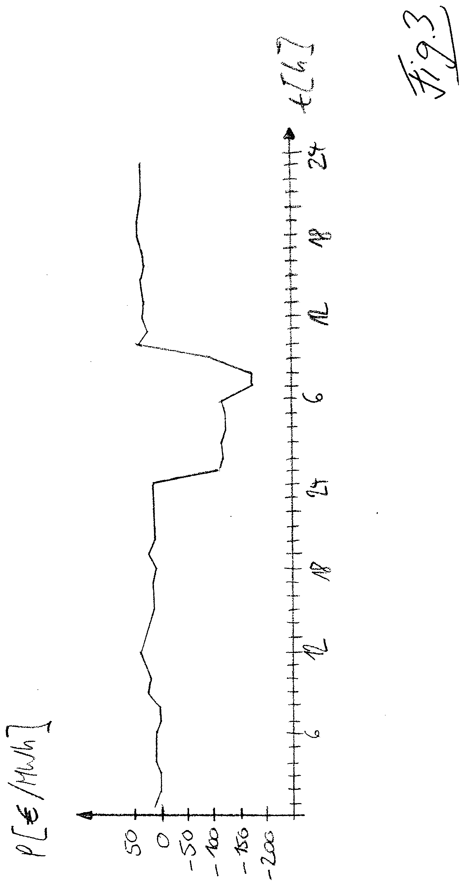

In der Figur 3 ist ein weiteres Diagramm eines Energiepreisverlaufs der von dem Energieversorgungsunternehmen im Stromversorgungsnetz 6 zur Verfügung gestellten elektrischen Energie dargestellt, wobei auf der Abszisse die Zeit t in Stunden [h] und auf der Ordinate der momentane Energiepreis P [€/MWh] aufgetragen ist.

In dem Verlauf der Figur 3 wird deutlich, dass der momentane Energiepreis P bei einem deutlichen Überangebot an produziertem und eingespeistem Strom bei entsprechendem Überangebot an produziertem Strom negative Werte aufweisen kann.

Mit der erfindungsgemäßen Batterieladeanlage 1 und dem erfindungsgemäßen Verfahren können innerhalb eines zur Verfügung stehenden Ladezeitraums T von beispielsweise 16 Stunden zum Laden der Traktionsbatterie 3 zwischen zwei Arbeitsschichten ein Ladezeitbereich T_{L} von beispielsweise acht Stunden zum Laden der Traktionsbatterie 3 herausgegriffen werden, in denen günstige Energiepreise P ermittelt werden.

Sofern Ladeunterbrechungen möglich sind, können in dem Ladezeitbereich T_{L} bei einer ungünstigen Entwicklung des Energiepreises P, beispielsweise beim Steigen des Energiepreises P in Zeitspannen T_{S}, der Ladevorgang unterbrochen werden und die erforderliche Ladezeit T_{LS} in dem zur Verfügung stehenden Ladezeitraum T bei einem günstigeren Energiepreis P gelegt werden.

Das erfindungsgemäße Verfahren ermöglicht es somit, mit einer Steuerung der Ladezeit T_{L} bzw. des Ladebeginns die Ladung der Traktionsbatterie 3 in Zeitbereiche niedrigen Energiepreises P innerhalb des zur Verfügung stehenden Ladezeitraums T zu legen.

Von der Regeleinrichtung 9 werden neben den Informationen über den Energiepreis P bei dem Ladevorgang Unternehmensvorgaben bzw. betriebsbedingte Vorgaben berücksichtigt, beispielsweise der maximale Energiepreis Pₘₐₓ, zu dem der Ladevorgang der Traktionsbatterie 3 durchgeführt werden soll, und/oder das späteste Ladeende T_{E}, an dem die Traktionsbatterie 3 aufgeladen sein muss.

Sofern hierbei die erforderliche Batterielademenge, d.h. die Stromabnahmemenge, berücksichtigt wird, kann eine Einzelsteuerung von Batterieladungen durchgeführt werden und eine Feinsteuerung der Stromabnahmemenge erzielt werden.

Diese weiteren Vorgabeparameter können mit dem Energiepreis P in Wechselwirkung stehen. Beispielsweise kann mit zunehmender Zeitablauf t innerhalb des zur Verfügung stehenden Ladezeitraums T und dem aktuellen Ladezustand der Traktionsbatterie 3 der maximale Energiepreis Pₘₐₓ angepasst werden, um sicherzustellen, dass am gewünschten Ladeende T_{E} die Traktionsbatterie 3 vollständig geladen ist.

Mit dem erfindungsgemäßen Verfahren und der erfindungsgemäßen Batterieladeanlage 1 kann die Ladung der Traktionsbatterie 3 abhängig von dem momentanen Energiepreis P und/oder abhängig von der zeitlichen Entwicklung und somit des Gradienten des momentanen Energiepreises P im Stromversorgungsnetz 6 des Energieversorgungsunternehmen gestartet und durchgeführt werden, so dass die Ladung der Traktionsbatterie 3 kostenseitig optimiert werden kann und die Energiekosten für die Ladung der Traktionsbatterie 3 gesenkt werden können.

Bei einer Ausbildung der Traktionsbatterie 3 als Lithium-Ionen-Batterie, die im Vergleich zu einer Blei-Batterie oder einer Nickel-Cadmium-Batterie eine kürzere Ladezeit aufweist und die mit höheren Ladeströmen aufgeladen werden kann, können mit dem erfindungsgemäßen Verfahren die kostenseitigen Vorteile für eine Batterieladung noch verstärkt werden.

Die Erfindung ist nicht auf die dargestellte Ausführungsform beschränkt. Anstelle der schaltbaren Netzsteckdose 10, mit der ein übliches Ladegerät 5 durch die Regeleinrichtung 9 ein- bzw. ausgeschalten werden kann, um den Ladevorgang der Traktionsbatterie 3 zu steuern, kann gemäß einer alternativen Ausführungsform die Regeleinrichtung 9 direkt mit dem Ladegerät 5 in Wirkverbindung stehen, um den Ladevorgang zu steuern. Beispielsweise kann hierbei die Regeleinrichtung 9 das Ladegerät 5 an- bzw. ausschalten oder auf das Ladegerät 5 steuernd Einfluss nehmen.

Zudem kann die Regeleinrichtung 9 und/oder der elektronische Stromzähler 7 in das Ladegerät 5 integriert werden.

Es ist weiterhin möglich, die erfindungsgemäße Batterieladeanlage 1 in das Fahrzeug 2 als Onboard-Ladegerät zu integrieren.

Anstelle der Ausbildung der Einrichtung 20 zum Ermitteln des momentanen Energiepreises von dem elektronischen Stromzähler 7, kann die Einrichtung 20 zur Ermittlung des momentanen Energiepreises dadurch gebildet werden, dass der momentane Energiepreise von dem Energieversorgungsunternehmen an die Batterieladeanlage 1 übermittelt werden und beispielsweise in der Speichereinrichtung 15 abgespeichert wird.

Unter Berücksichtigung der in der Batterieladeanlage 1 vorgegebenen Vorgabeparameter kann der Ladevorgang, insbesondere der Ladebeginn, von dem Energieversorgungsunternehmen beeinflusst werden.

## Patentansprüche

1. Verfahren zum Laden einer Traktionsbatterie (3) eines batterie-elektrisch betriebenen Fahrzeugs (2), insbesondere eines Flurförderzeugs, mittels einer Batterieladeanlage (1), die ein Ladegerät (5) zum Laden der Traktionsbatterie (3), eine Einrichtung (20) zur Ermittlung des momentanen Energiepreises (P) im Stromversorgungsnetz (6), eine elektronische Regeleinrichtung (9) zum Steuern des Ladevorgangs aufweist, wobei zur Ermittlung des momentanen Energiepreises (P) ein elektronischer Stromzähler (7) zum Erfassen und zur Abfrage des momentanen Energiepreises (P) in einem Stromversorgungsnetz (6) vorgesehen ist, mit dem das Ladegerät (5) mit dem Stromversorgungsnetz (6) eines Energieversorgungsunternehmens verbunden ist, wobei die elektronische Regeleinrichtung (9) mit dem elektronischen Stromzähler (7) in Verbindung steht, mit den folgenden Schritten:
• Ermitteln des momentanen Energiepreises (P) im Stromversorgungsnetz (6) durch die elektronische Regeleinrichtung (9) mit dem elektronischer Stromzähler (7),
• Durchführen des Ladens der Traktionsbatterie (3) durch die elektronische Regeleinrichtung (9) in Abhängigkeit von dem momentanen Energiepreis (P) und/oder der zeitlichen Energiepreisentwicklung des momentanen Energiepreis (P) im Stromversorgungsnetz,
wobei von der Batterieladeanlage (1) Wetterdaten und/oder Wettervorhersagen, die sich auf die Erzeugungsmenge regenerativer Energie auswirken, erfasst und berücksichtigt werden, wobei von der Regeleinrichtung (9) anhand der Wetterdaten und/oder Wettervorhersagen Prognosen des Energiepreises ermittelt werden, die bei dem Ladevorgang der Traktionsbatterie (3) berücksichtigt werden.

2. Verfahren nach Anspruch 1, **dadurch gekennzeichnet, dass** der momentane Energiepreis (P) durch eine Datenübermittlung vom Energieversorgungsunternehmen des Stromversorgungsnetzes (6) erfasst wird.

3. Verfahren nach Anspruch 1 oder 2, **dadurch gekennzeichnet, dass** innerhalb eines zur Verfügung stehenden Ladezeitraums (T) zum Laden der Traktionsbatterie (3) der momentane Energiepreis (P) fortlaufend ermittelt wird und von der Batterieladeanlage (1) innerhalb des Ladezeitraumes (T) mindestens ein Ladezeitbereich (T_{L}) zum Laden der Traktionsbatterie (3) ermittelt wird, in dem die Traktionsbatterie (3) geladen wird.

4. Verfahren nach einem der Ansprüche 1 bis 3, **dadurch gekennzeichnet, dass** beim Laden der Traktionsbatterie (3) einer oder mehrere der folgenden Vorgabeparameter von der Batterieladeanlage (1) berücksichtigt werden:
• erforderliche Kapazität, d.h. in der Batterie gespeicherte elektrische Ladung, der Traktionsbatterie (3) am Ladeende,
• die erforderliche Batterielademenge, d.h. die Stromabnahmemenge,
• maximaler Energiepreis,
• zur Verfügung stehender Ladezeitraum (T_{L}),
• Ladeende (T_{E}),
• Anzahl von möglichen Ladeunterbrechungen,
• maximaler Preis der Batterieladung,
• Gradient des momentanen Energiepreises.

5. Verfahren nach einem der Ansprüche 1 bis 4, **dadurch gekennzeichnet, dass** der Ladestart der Batterieladung durch das Energieversorgungsunternehmen beeinflusst wird.

6. Verfahren nach einem der Ansprüche 1 bis 4, **dadurch gekennzeichnet, dass** zur Ermittlung des momentanen Energiepreises (P) der momentane Energiepreis (P) von dem Energieversorgungsunternehmen an die Batterieladeanlage (1) übermittelt und in einer Speichereinrichtung (15) abgespeichert wird.

7. Verfahren nach einem der Ansprüche 1 bis 6, **dadurch gekennzeichnet, dass** die Batterieladeanlage (1) eine schaltbare Netzsteckdose (10) umfasst mittels der das Ladegerät (5) an das Stromversorgungsnetz (6) angeschlossen ist, wobei die Steuerung des Ladevorgangs durch An- und Ausschalten der Netzsteckdose (10) durchgeführt wird.

8. Verfahren nach einem der Ansprüche 1 bis 7, **dadurch gekennzeichnet, dass** die Batterieladeanlage (1) eine elektronische Regeleinrichtung (9) zum Steuern des Ladevorgangs aufweist.

9. Verfahren nach Anspruch 8, **dadurch gekennzeichnet, dass** die Vorgabeparameter in der elektronischen Regeleinrichtung (9) eingegeben und abgespeichert werden.

10. Verfahren nach einem der Ansprüche 1 bis 9, **dadurch gekennzeichnet, dass** von der Batterieladeanlage (1) Batteriedaten und/oder Zustandsdaten der zu ladenden Traktionsbatterie (3) erfasst und berücksichtigt werden.

11. Verfahren nach einem der Ansprüche 1 bis 10, **dadurch gekennzeichnet, dass** betriebsinterne Erfahrungswerte von der Batterieladeanlage (1) berücksichtigt werden.

12. Batterieladeanlage (1), die ein Ladegerät (5) zum Laden einer Traktionsbatterie (3), einen elektronischen Stromzähler (7) zum Erfassen des aktuellen Energiepreises (P) im Stromversorgungsnetz bzw. eine Speichereinrichtung (15) zum Empfangen des aktuellen Energiepreises (P) im Stromversorgungsnetz und eine elektronische Regeleinrichtung (9) zum Steuern des Ladevorgangs aufweist, wobei zur Ermittlung des momentanen Energiepreises (P) ein elektronischer Stromzähler (7) zum Erfassen und zur Abfrage des momentanen Energiepreises (P) in einem Stromversorgungsnetz (6) vorgesehen ist, mit dem das Ladegerät (5) mit dem Stromversorgungsnetz (6) eines Energieversorgungsunternehmens verbunden ist, wobei die elektronische Regeleinrichtung (9) mit dem elektronischen Stromzähler (7) in Verbindung steht und die Regeleinrichtung (9) mit einer Empfangseinrichtung (19) für Wetterdaten und/oder Wettervorhersagen versehen ist, die sich auf die Erzeugungsmenge regenerativer Energie auswirken, wobei die Regeleinrichtung (9) anhand der Wetterdaten und/oder Wettervorhersagen Prognosen des Energiepreises ermittelt, die bei dem Ladevorgang der Traktionsbatterie (3) berücksichtigt werden, wobei die Batterieladeanlage (1) ein Verfahren nach einem der Ansprüche 1 bis 11 durchführt.

13. Batterieladeanlage nach Anspruch 12, **dadurch gekennzeichnet, dass** die Batterieladeanlage (1) eine schaltbare Netzsteckdose (10) aufweist, mittels der das Ladegerät (5) an das Stromversorgungsnetz (6) angeschlossen ist, wobei die Steuerung des Ladevorgangs durch Ein- und Ausschalten der Netzsteckdose (10) durch die Regeleinrichtung erfolgt.

14. Batterieladeanlage nach Anspruch 12 oder 13, **dadurch gekennzeichnet, dass** die elektronische Regeleinrichtung (9) mit einer Speichereinrichtung (15) für die Vorgabeparameter versehen ist.

15. Batterieladeanlage nach einem der Ansprüche 12 bis 14, **dadurch gekennzeichnet, dass** die Regeleinrichtung (9) mit einer Empfangseinrichtung (18) für Batteriedaten und/oder Zustandsdaten der zu ladenden Traktionsbatterie (3) versehen ist.

## Claims

1. Method for charging a traction battery (3) of an electric battery-operated vehicle (2), in particular of an industrial truck, by means of a battery charging system (1) which has a charger (5) for charging the traction battery (3), a device (20) for ascertaining the current energy price (P) in the electricity supply network (6), an electronic control device (9) for controlling the charging process, wherein an electronic electricity meter (7) for detesting and for checking the current energy price (P) in an electricity supply network (6) is provided for the purpose of ascertaining the current energy price (P) and the charger (5) is connected to the electricity supply network (6) of an energy supply company by way of the said electronic electricity meter, wherein the electronic control device (9) is connected to the electronic electricity meter (7), the said method comprising the following steps:
• ascertaining the current energy price (P) in the electricity supply network (6) using the electronic control device (9) width the electronic electricity meter (7),
• performing charging of the traction battery (3) using the electronic control device (9) depending on the current energy price (P) and/or the development of the current energy price (P) in the electricity supply network over time,
wherein weather data and/or weather forecasts which have an effect on the quantity of regenerative energy produced are detected and taken into account by the battery charging system (1), wherein predictions for the energy price, which are taken into account in the charging process of the traction battery (3), are ascertained by the control device (9) on the basis of the weather data and/or weather forecasts.

2. Method according to Claim 1, **characterized in that** the current energy price (P) is determined by data transmission from the energy supply company of the electricity supply network (6).

3. Method according to Claim 1 or 2, **characterized in that** the current energy price (P) is continuously ascertained within an available charging time period (T) for charging the traction battery (3) and at least one charging time range (T_{L}) for charging the traction battery (3), in which charging time range the traction battery (3) is charged, is ascertained by the battery charging system (1) within the charging time period (T).

4. Method according to one of Claims 1 to 3, **characterized in that**, when charging the traction battery (3), one or more of the following prespecified parameters are taken into account by the battery charging system (1) :
• required capacity, that is to say electrical charge stored in the battery, of the traction battery (3) at the end of charging,
• the required battery charging quantity, that is to say the quantity of electricity purchased,
• maximum energy price,
• available charging time period (T_{L}),
• end of charging (T_{E}),
• number of possible interruptions in charging,
• maximum price of the battery charge,
• gradient of the current energy price.

5. Method according to one of Claims 1 to 4, **characterized in that** the start of charging of the battery charge is influenced by the energy supply company.

6. Method according to one of Claims 1 to 4, **characterized in that**, for the purpose of ascertaining the current energy price (P), the current energy price (P) is transmitted to the battery charging system (1) by the energy supply company and stored in a memory device (15).

7. Method according to one of Claims 1 to 6, **characterized in that** the battery charging system (1) comprises a switchable mains plug socket (10) by means of which the charger (5) is connected to the electricity supply network (6), wherein the charging process is controlled by the mains plug socket (10) being turned on and turned off.

8. Method according to one of Claims 1 to 7, **characterized in that** the battery charging system (1) has an electronic control device (9) for controlling the charging process.

9. Method according to Claim 8, **characterized in that** the prespecified parameters are input into and stored in the electronic control device (9).

10. Method according to one of Claims 1 to 9, **characterized in that** battery data and/or state data of the traction battery (3) to be charged is detected and taken into account by the battery charging system (1).

11. Method according to one of Claims 1 to 10, **characterized in that** in-house empirical values are taken into account by the battery charging system (1).

12. Battery charging system (1) which has a charger (5) for charging a traction battery (3), an electronic electricity meter (7) for detecting the current energy price (P) in the electricity supply network or a memory device (15) for receiving the current energy price (P) in the electricity supply network, and an electronic control device (9) for controlling the charging process, wherein an electronic electricity meter (7) for detecting and for checking the current energy price (P) in an electricity supply network (6) is provided for the purpose of ascertaining the current energy price (P) and the charger (5) is connected to the electricity supply network (6) of an energy supply company by way of the said electronic electricity meter, wherein the electronic control device (9) is connected to the electronic electricity meter (7), and the control device (9) is provided with a receiving device (19) for weather data and/or weather forecasts which have an effect on the quantity of regenerative energy produced, wherein the control device (9) ascertains predictions for the energy price, which are taken into account in the charging process of the traction battery (3), on the basis of the weather data and/or weather forecasts, wherein the battery charging system (1) performs a method according to one of Claims 1 to 11.

13. Battery charging system according to Claim 12, **characterized in that** the battery charging system (1) has a switchable mains plug socket (10) by means of which the charger (5) is connected to the electricity supply network (6), wherein the charging process is controlled by the mains plug socket (10) being switched on and switched off by the control device.

14. Battery charging system according to Claim 12 or 13, **characterized in that** the electronic control device (9) is provided with a memory device (15) for the prespecified parameters.

15. Battery charging system according to one of Claims 12 to 14, **characterized in that** the control device (9) is provided with a receiving device (18) for battery data and/or state data of the traction battery (3) to be charged.

## Revendications

1. Procédé pour la charge d'une batterie de traction (3) d'un véhicule entraîné électriquement par batterie (2), notamment d'un chariot de manutention, au moyen d'un système de charge de batterie (1), qui comporte un appareil de charge (5) pour la charge de la batterie de traction (3), un dispositif (20) destiné à déterminer le coût énergétique instantané (P) sur le réseau de distribution électrique (6), un dispositif de régulation électronique (9) pour commander le processus de charge, dans lequel, pour déterminer le coût énergétique instantané (P), il est prévu un compteur d'électricité électronique (7) destiné à détecter et à demander le coût énergétique instantané (P) sur un réseau de distribution électrique (6), au moyen duquel l'appareil de charge (5) est relié au réseau de distribution électrique (6) d'un fournisseur d'alimentation en énergie, dans lequel le dispositif de régulation électronique (9) est en liaison avec le compteur d'électricité électronique (7), comprenant les étapes suivantes :
• la détermination du coût énergétique instantané (P) sur le réseau de distribution électrique (6) par le dispositif de régulation électronique (9) à l'aide du compteur d'électricité électronique (7),
• la réalisation de la charge de la batterie de traction (3) par le dispositif de régulation électronique (9) en fonction du coût énergétique instantané (P) et/ou de l'évolution temporelle de coût énergétique du coût énergétique instantané (P) sur le réseau de distribution électrique,
dans lequel des données météorologiques et/ou des prévisions météorologiques, qui ont un effet sur la quantité produite d'énergie renouvelable, sont détectées et prises en compte par le système de charge de batterie (1), dans lequel des pronostics du coût énergétique sont déterminés, ceux-ci étant pris en compte par le dispositif de régulation (9) sur la base des données météorologiques et/ou des prévisions météorologiques lors du processus de charge de la batterie de traction (3).

2. Procédé selon la revendication 1, **caractérisé en ce que** le coût énergétique instantané (P) est détecté par une transmission de données effectuée par le fournisseur d'alimentation en énergie du réseau de distribution électrique (6).

3. Procédé selon la revendication 1 ou 2, **caractérisé en ce que** le coût énergétique instantané (P) est déterminé en continu au cours de l'intervalle de temps de charge disponible (T) pour la charge de la batterie de traction (3) et **en ce qu'**au moins une plage de temps de charge (T_{L}) est déterminée par le système de charge de batterie (1) au cours de l'intervalle de temps de charge (T) pour la charge de la batterie de traction (3), plage pendant laquelle la batterie de traction (3) est chargée.

4. Procédé selon l'une quelconque des revendications 1 à 3, **caractérisé en ce que**, lors de la charge de la batterie de traction (3), un ou plusieurs des paramètres par défaut suivants du système de charge de batterie (1) sont pris en compte :
• capacité nécessaire, c'est-à-dire la charge électrique stockée dans la batterie, de la batterie de traction (3) à la fin de la charge,
• le niveau de charge de batterie nécessaire, c'est-à-dire la quantité de courant prélevée,
• le coût énergétique maximal,
• l'intervalle de temps de charge disponible (T_{L}),
• la fin de charge (T_{E}),
• la nombre des éventuelles interruptions de la charge,
• le coût maximal de la charge de la batterie,
• le gradient du coût énergétique instantané.

5. Procédé selon l'une quelconque des revendications 1 à 4, **caractérisé en ce que** le début de charge de la charge de la batterie est influencé par le fournisseur d'alimentation en énergie.

6. Procédé selon l'une quelconque des revendications 1 à 4, **caractérisé en ce que**, pour la détermination du coût énergétique instantané (P), le coût énergétique instantané (P) du fournisseur d'alimentation en énergie est transmis au système de charge de batterie (1) et est enregistré dans un dispositif à mémoire (15).

7. Procédé selon l'une quelconque des revendications 1 à 6, **caractérisé en ce que** le système de charge de batterie (1) comprend une prise de courant commutable (10) au moyen de laquelle l'appareil de charge (5) est raccordé au réseau de distribution électrique (6), dans lequel la commande du processus de charge est effectuée par mise en et hors circuit de la prise de courant (10).

8. Procédé selon l'une quelconque des revendications 1 à 7, **caractérisé en ce que** le système de charge de batterie (1) comporte un dispositif de régulation électronique (9) destiné à commander le processus de charge.

9. Procédé selon la revendication 8, **caractérisé en ce que** les paramètres par défaut sont chargés et enregistrés dans le dispositif de régulation électronique (9).

10. Procédé selon l'une quelconque des revendications 1 à 9, **caractérisé en ce que** des données de batterie et/ou des données d'état de la batterie de traction (3) à charger sont détectés et pris en compte par le système de charge de batterie (1).

11. Procédé selon l'une quelconque des revendications 1 à 10, **caractérisé en ce que** des valeurs empiriques internes à la batterie sont prises en compte par le système de charge de batterie (1).

12. Système de charge de batterie (1) comportant un appareil de charge (5) pour la charge d'une batterie de traction (3), un compteur d'électricité électronique (7) pour détecter le coût énergétique actuel (P) sur le réseau de distribution électrique ou un dispositif à mémoire (15) destiné à recevoir le coût énergétique actuel (P) sur le réseau de distribution électrique et un dispositif de régulation électronique (9) destiné à commander le processus de charge, dans lequel il est prévu, pour la détermination du coût énergétique instantané (P), un compteur d'électricité électronique (7) destiné à détecter et à demander le coût énergétique instantané (P) sur un réseau de distribution électrique (6), au moyen duquel l'appareil de charge (5) est relié au réseau de distribution électrique (6) d'un fournisseur d'alimentation en énergie, dans lequel le dispositif de régulation électronique (9) est en liaison avec le compteur d'électricité électronique (7) et le dispositif de régulation (9) est muni d'un dispositif de réception (19) destiné à des données météorologiques et/ou à des prévisions météorologiques ayant un effet sur la quantité produite d'énergie renouvelable, dans lequel le dispositif de régulation (9), sur la base des données météorologiques et/ou des prévisions météorologiques, détermine des pronostics du coût énergétique qui sont pris en compte lors du processus de charge de la batterie de traction (3), dans lequel le système de charge de batterie (1) met en oeuvre un procédé selon l'une quelconque des revendications 1 à 11.

13. Système de charge de batterie selon la revendication 12, **caractérisé en ce que** le système de charge de batterie (1) comporte une prise de courant commutable (10) au moyen de laquelle l'appareil de charge (5) est relié au réseau de distribution électrique (6), dans lequel la commande du processus de charge est effectuée par mise en et hors circuit de la prise de courant (10) par l'unité de régulation.

14. Système de charge de batterie selon la revendication 12 ou 13, **caractérisé en ce que** le dispositif de régulation électronique (9) est muni d'un dispositif à mémoire (15) destiné aux paramètres par défaut.

15. Système de charge de batterie selon l'une quelconque des revendications 12 à 14, **caractérisé en ce que** le dispositif de régulation électronique (9) est muni d'un dispositif de réception (18) destiné à des données de batterie et/ou à des données d'état de la batterie de traction (3) à charger.
